# EUROPÄISCHE PATENTSCHRIFT

(11) **EP 1 323 508 B1**
(45) Veröffentlichungstag und Bekanntmachung des Hinweises auf die Patenterteilung: **07.03.2012**
(21) Anmeldenummer: 02028982.3
(22) Anmeldetag: 27.12.2002
(51) Int. Cl.: B27D 5/00, B27G 17/04

(54) **Vorrichtung zum Bearbeiten von Kantenstreifen**
Apparatus for working of edge strips
Machine pour affleurer des bandes de bords

(30) Priorität: 28.12.2001 DE 20121017 U
(43) Veröffentlichungstag der Anmeldung: 02.07.2003
(73) Patentinhaber: REHAU AG + Co, 95111 Rehau (DE)
(72) Erfinder: Bredow, Ulrich, 95111 Rehau (DE)

(56) Entgegenhaltungen:
- EP-A- 0 976 483
- CH-A- 666 411
- DE-A1- 4 217 589
- DE-C- 306 005
- DE-C1- 3 732 810
- DE-U1- 9 015 079
- DE-U1- 9 109 783
- DE-U1- 20 121 017
- US-A- 2 042 273

## Beschreibung

Die Erfindung betrifft eine Vorrichtung zur Bearbeitung von Kantenstreifen aus thermoplastischen Werkstoffen, die auf die Schmalseiten von Platten aus holzartigen Werkstoffen für den Möbelbau oder dergleichen aufgebracht sind, mittels zumindest einer im Wesentlichen ortstesten Ziehklinge mit einer Oberseite (53) mit wenigstens einer der zu erzielenden Kantenkorrektur entsprechenden Schneide, mit der die Platten mit den Kantenstreifen in Eingriff gebracht sind. Eine solche Vorrichtung ist aus der DE 4217589 bekannt.

Insbesondere bei aus Pressspan aufgebauten flächigen Elementen für Möbelstücke wie z. B. Tischplatten, Schrankseitenteilen, Schranktüren etc. müssen auch die Stirnflächen gegen das Eindringen von Feuchtigkeit und aus Gründen der Optik und des Designs abgedeckt werden. Die Hauptoberflächen solcher Flächenelemente sind bereits mit einer auflaminierten Außenschicht versehen. Bei den Stirnflächen verwendet man in vielen Fällen Kantenstreifen, beispielsweise aus thermoplastischen Werkstoffen. Das Anbringen solchen Leisten erfolgt in vielen Fällen maschinell im Durchlaufverfahren von automatisierten Einrichtungen. Hierbei muss darauf geachtet werden, dass die Oberflächen des Flächenelementes und des Kantenstreifens möglichst ohne Absatz ineinander übergehen, so dass ein optisch tadelloses Erscheinungsbild vorhanden ist.
Derartige Kantenstreifen werden in sogenannten Kantenanleimmaschinen an die betreffende Stirnseite der Platte angefahren und mittels eines Klebers verleimt. Nach dem Trennen der Enden des Kantenstreifens an der vorderen und der hinteren Stirnseite der Platte erfolgt das Formfräsen des Kantenstreifens. Dabei muss der bei der Verklebung möglicherweise an den Stoßstellen der Oberfläche überquellende Klebstoff mit entfernt werden.
In einer weiteren Station der Kantenanleimmaschine durchlaufen die Flächenelemente, Platten mit den derart vorbearbeiteten Kantenstreifen eine Nacharbeitseinrichtung mit einer gattungsbildenden Vorrichtung, um dem Kantenstreifen die endgültige Außenkontur unter Entfernung der Fräsmarken zu geben.
Dabei bildet sich ein sogenannter Weißbruch an den Schnittflächen der thermoplastischen Kantenstreifen, der als störender Weiß- oder Grauschimmer an der Sichtseite der Kantenstreifen auftritt, d. h. die nachbearbeitete Fräsfläche ist heller als die eigentliche Kantenfläche.

Deshalb schließt sich im bekannten Stand der Technik an die Vorrichtung mit den Ziehklingen noch eine weitere Station an, in der die Schnittflächen der Kantenstreifen nachbearbeitet werden. Dadurch soll der Weißbruch an den Kantenstreifen entfernt werden und eine zumindest mattglänzende Oberfläche der Kantenstreifen an den Sichtseiten erreicht werden.

In der DE 100 06 661 ist ein derartiges Verfahren zum Nachbearbeiten von Kantenstreifen beschrieben.
Bei diesem Verfahren, dass auch einer maschinellen Durchführung zugänglich ist, wird ein Überstand des Kantenstreifens bezüglich eines angrenzenden Abschnitts des Flächenelementes, Platte zu einem großen Teil spanabhebend beseitigt, vorzugsweise durch einen Fräsvorgang. Dann wird zumindest die spanend bearbeitete und mit Weißbruchstellen versehene Fläche des Kantenstreifens mit einem Multikomponenten-Schmieröl mit hoher Kriechfähigkeit benetzt und anschließend der verbleibende Restüberstand mit mindestens einer Walzenbürste entfernt und somit ein glatter Übergang von Flächenelement und Kantenstreifen gebürstet. Das Multikomponenten-Schmieröl mit der hohen Kriechfähigkeit dringt in sämtliche Ritzen, insbesondere im Bereich der Weißbruchstellen ein und benetzt diese Oberfläche vollständig. Durch die nachfolgende Bearbeitung der vollständig benetzten Kunststoffoberfläche mit den Walzenbürsten sorgt das Multikomponenten-Schmieröl für ein sauberes und glattes Abtragen durch die Bürsten, so dass die Weißbruchstellen und auch Leim- bzw. Kleberreste vollständig entfernt werden.

Nachteilig bei diesem Verfahren wird gesehen, dass der Aufwand zur Herstellung eines derartigen Flächenelementes, Platte sehr hoch ist durch die Anzahl der unterschiedlichen Vor- und Nachbearbeitungsvorgänge.
Weiterhin nachteilig bei diesem Verfahren wird gesehen, dass das verwendete Multikomponenten-Schmieröl die Oberflächen des Flächenelementes, Platte sowie auch die Klebestelle sowie den Kantenstreifen verschmutzt und unter Umständen diese Oberflächen chemisch angreift.

Aus der DE 42 17 589 A1 ist eine Vorrichtung zum Schneiden eines Spanes an einer Einrichtung zur spanenden Bearbeitung eines Werkstückes beschrieben. Mittels eines spanabhebenden Werkzeuges einer sog. Ziehklinge erfolgt die Bearbeitung des Werkstückes. Parallel zu dem Werkzeug ist ein schwenkbares Gegenwerkzeug gelagert, welches um eine Achse reversierend bewegbar ist.

Die Vorrichtung dient der Bearbeitung von Kantenstreifen aus thermoplastischen Werkstoffen, die auf die Schmalseiten von Flächenelementen, Platten aus holzartigen Werkstoffen für den Möbelbau und dergleichen aufgebracht sind mittels zumindest einer im Wesentlichen ortsfesten Ziehklinge mit wenigstens einer der zu erzielenden Kantenkontur entsprechenden Schneide, mit der die Platten mit den Kantenstreifen in Eingriff gebracht sind. Die Schneide der Ziehklinge weist einen Bereich auf, der in etwa einem spitzen Winkel zur Oberseite der Ziehklinge angeordnet ist. Der Bereich der Ziehklinge verbindet die Oberseite mit der Unterseite der Ziehklinge.

Aus der DE 37 32 810 C1 ist eine Vorrichtung zur Bearbeitung der Kantenränder von fortlaufend bewegten plattenförmigen Werkstücken mittels einer auf den Kantenrand einwirkenden Werkzeuganordnung, deren Lage zum Kantenrand jeweils durch zwei Tastenelemente gesteuert wird, von denen das eine auf der Kantenfläche und das andere auf der Oberseite des Werkstückes abrollt, derart weitergebildet, dass ohne große Rüstzeiten und ohne Vergrößerung der Maschinenlänge im Bedarfsfall zwei oder mehrere unterschiedliche Bearbeitungsvorgänge an den Kantenbändern durchgeführt werden können. Erfindungsgemäß ist die Werkzeuganordnung mit einem zwei oder mehrere nebeneinander angeordnete Werkzeuge aufweisenden Werkzeugsatz ausgestattet und das jeweilige für die Bearbeitung vorgesehene Werkzeug durch Verschieben des Werkzeugsatzes in Einsatzstellung zu bringen ist. Dabei ist zumindest das auf der Oberseite des Werkstückes abrollende Tastelement als Taststreifen ausgebildet, durch dessen lichte Reifenöffnung der Werkzeugsatz zumindest teilweise hindurchschiebbar ist.

So sind am Werkzeugsatz die Werkzeuge angeordnet, welche die gewünschte Kontur an den Kantenstreifen in verschiedenen Geometrien anbringen. Diese Werkzeuge sind in Form an sich bekannter Ziehklingen geometrisch ausgebildet. Ein weiterer Werkzeugsatz mit anderen Werkzeugen dient dazu, die an den Platten fixierten Kantenstreifen entsprechend ihrer Kontur durch eine rotierende Bewegung abzufräsen bzw. zu polieren. Diese über eine Achse rotierenden Werkzeuge sind keine im Wesentlichen ortsfesten Ziehklingen.

Hier setzt die Erfindung ein, die es sich zur Aufgabe gestellt hat, die Nachteile des Standes der Technik zu beseitigen und eine Vorrichtung zur Bearbeitung von Kantenstreifen aus thermoplastischen Werkstoffen aufzuzeigen, die wirtschaftlich und kostengünstig herstellbar ist, die eine schnelle Bearbeitung der Kantenstreifen auch im automatisierten Fertigungsverfahren zulässt und bei der in der Nachbearbeitung der Kantenstreifen an den Schnittflächen erst gar kein Weißbruch auftritt, womit eine zusätzliche Nachbearbeitung der Schnittflächen überflüssig ist.

Diese Aufgabe wird bei der erfindungsgemäßen Vorrichtung durch die Merkmale des Anspruches 1 gelöst.
Hierdurch kann vorteilhafterweise erreicht werden, dass die durch den Einsatz der erfindungsgemäßem Vorrichtung von dem Kantenstreifen abgezogenen Ziehspäne aus dem thermoplastischen Werkstoff sehr lang sind, was zu einer sauberen Schnittfläche, zu einer leichteren Entsorgung und zu besseren Recyclingeigenschaften führt.
Weitere vorteilhafte Ausführungsformen sind in den Unteransprüchen beschrieben.

Der Vorteil der erfindungsgemäßen Vorrichtung wird insbesondere darin gesehen, dass bei der Bearbeitung der Kantenstreifen ein Weißbruch erst gar nicht entstehen kann, so dass die bearbeitenden Kantenstreifen fertige Schnittflächen aufweisen, die nicht mehr nachbearbeitet werden müssen.

Je nach Art des zu bearbeitenden thermoplastischen Werkstoffes des Kantenstreifens kann der Abstand des zweiten Bereiches dimensioniert werden, wobei überraschenderweise festgestellt wurde, dass dieser Bereich wenigstens einem Zwanzigstel der Dicke der Ziehklinge entspricht.
Es konnte weiterhin festgestellt werden, dass auf Grund des Einsatzes der erfindungsgemäßen Vorrichtung so optimale Schnittflächen erreichbar sind, dass auf eine vorangehende Fräsbearbeitung mit dem daraus erwachsenden zusätzlichen Fertigungs- und Verschmutzungsaufwand verzichtet werden kann, wobei dies wiederum von der Geometrie und dem Werkstoff des thermoplastischen Kantenstreifens abhängig ist.

Ein weiterer Vorteil der erfindungsgemäßen Vorrichtung wird darin gesehen, dass bei verschiedenen Geometrien der thermoplastischen Kantenstreifen der erste Bereich der Schneide, der sich an die Oberseite anschließt, konkav oder konvex zur Oberseite der Ziehklinge ausgebildet ist.

Die erfindungsgemäße Vorrichtung soll nun anhand von Ausführungsbeispielen, welche die Erfindung nicht einschränken, näher beschrieben werden. Es zeigen:
- Fig. 1: eine schematische Seitenansicht einer Vorrichtung zur Bearbeitung eines Kantenstreifens
- Fig. 2: eine schematische perspektivische Ansicht einer Ziehklinge der erfindungsgemäßen Vorrichtung
- Fig. 3: eine weitere perspektivische Ansicht einer Ziehklinge der erfindungsgemäßen Vorrichtung.

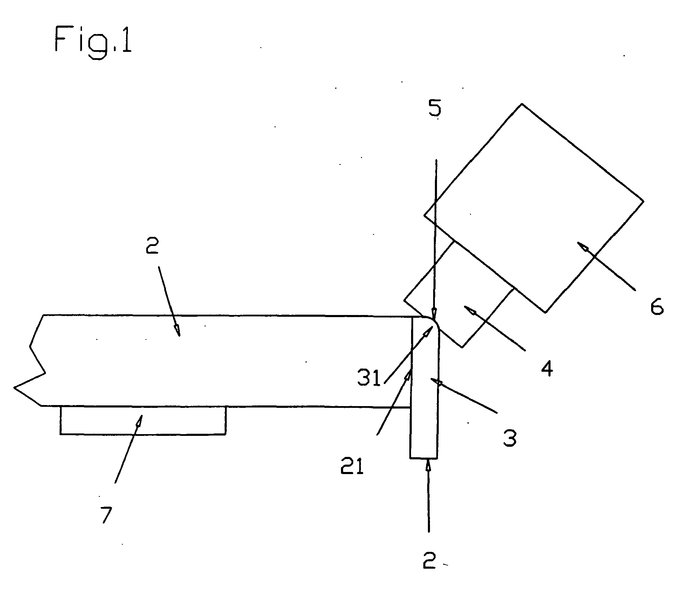

In Fig.1 ist die Vorrichtung 1 dargestellt, mit der an den Stirnseiten 31, 32 des Kantenstreifens 3 die entsprechende Geometrie aufgebracht wird. Die Bearbeitung derartiger, bereits an Flächenelementen, Platten 2 befestigter Kantenstreifen 3 erfolgt zweckmäßigerweise im Anschluss an die Kantenanleimmaschine bzw. auch als separate Arbeitsstation in der Kantenanleimmaschine. Von dieser Kantenanleimmaschine ist in der Fig. 1 nur das Transportelement 7 dargestellt, auf dem das Flächenelement/Platte 2 mit dem Kantenstreifen 3 an der in Förderrichtung liegenden Schmalseite 21 an der Vorrichtung 1 vorbeigeführt wird. Die erfindungsgemäße Vorrichtung 1 umfasst in diesem Ausführungsbeispiel ein Befestigungselement 6, an dem eine Ziehklinge 4 befestigbar ist. Hier ist die an dem Befestigungselement 6 befestigbare Ziehklinge 4 ortsfest gegenüber den durchlaufenden Platten 2 angeordnet.
An seinem zum Flächenelement, Platte 2 zugeordneten Ende weist die Ziehklinge 4 eine Schneide 5 auf, die in Eingriff mit der oberen Stirnseite 31 des Kantenstreifens 3, der gerade an der Vorrichtung 1 vorbeilaufenden Platte 2 in Eingriff steht, wobei die Schneide 5 die Gegenkontur aufweist, die der endgültigen gerundeten Außenkontur der oberen Stirnseite 31 des Kantenstreifens 3 entspricht. Gegenüber der oberen Stirnseite 31 weist der Kantenstreifen 3 an seiner unteren Stirnseite 32 einen Überstand auf, der durch die erfindungsgemäße Vorrichtung 1 noch soweit abgearbeitet werden muss, dass er der Kontur der oberen Stirnseite 31 entspricht.
Dazu kann das Flächenelement, Platte 2 in einem weiteren Arbeitsschritt so gewendet werden, dass die untere Stirnseite 32 des Kantenstreifens 3 in Anlage zur Schneide 5 der Ziehklinge 4 gebracht und das überschüssige Material durch eine orthogonal zur Vorrichtung 1 gesteuerte Bewegung des Transportelementes 7 mit der Platte 2 erfolgt.
Es liegt jedoch auch im Rahmen der Erfindung, dass beispielsweise zwei erfindungsgemäße Vorrichtungen 1 gleichzeitig zum Einsatz kommen und so die Kontur der Schneide 5 der Ziehklinge 4 sowohl auf die obere Stirnseite 31 als auch auf die untere Stirnseite 32 des Kantenstreifens aufbringbar ist.
Die Vorrichtung 1 kann jedoch auch in einem sogenannten Bearbeitungszentrum eingesetzt werden, bei dem die Platte 2 ortsfest fixiert und die Vorrichtung 1 an dem an der Stirnseite 21 der Platte 2 angebrachten Kantensstreifen 3 entlanggeführt wird.

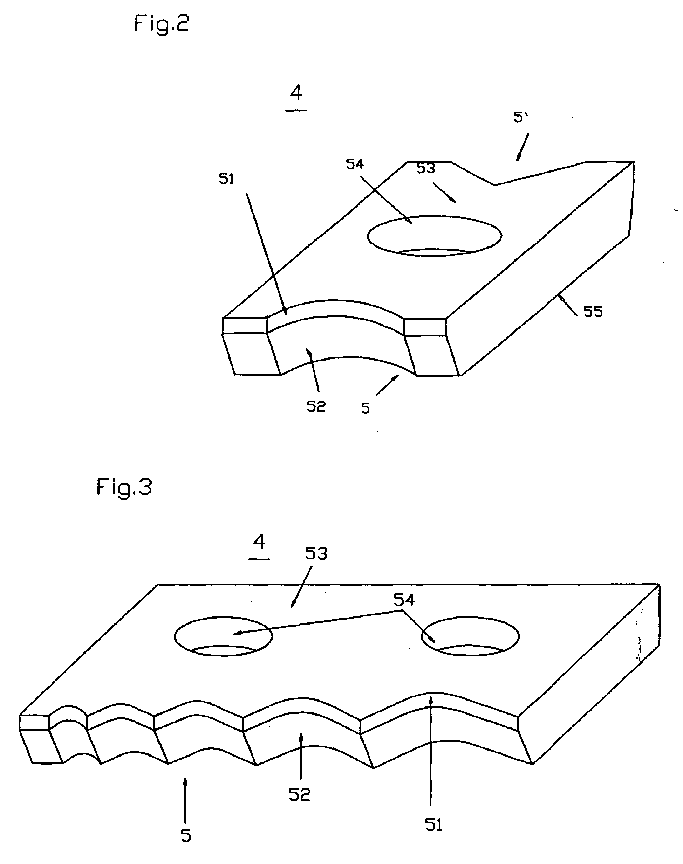

In Fig. 2 ist in einer schematischen perspektivischen Ansicht die Ziehklinge 4 der erfindungsgemäßen Vorrichtung 1 dargestellt. In diesem Ausführungsbeispiel sind an den Stirnseiten der Ziehklinge 4 zwei sich gegenüberliegende Schneiden 5, 5' angeordnet. Zwischen den Schneiden 5, 5' der Ziehklinge 4 ist eine Öffnung 54 angeordnet, mit der die Ziehklinge 4 in dem Befestigungselement 6 der Vorrichtung 1 fixierbar ist. Es liegt jedoch auch im Rahmen der Erfindung, dass an den Stirn- und Seitenflächen der Ziehklinge 4 eine oder mehrere Schneiden 5, 5' anordenbar sind.
An der im Detail sichtbaren Schneide 5 der Ziehklinge 4 sind ein erster Bereich (51) und ein zweiter Bereich 52 ausgebildet, wobei der zweite Bereich 52 durch den ersten Bereich 51 von der Oberseite 53 der Ziehklinge 4 beabstandet angeordnet ist. Der zweite Bereich 52 ist in einem spitzen Winkel zur Oberseite 53 der Ziehklinge 4 ausgeführt. Der erste Bereich 51 der Schneide 5, der sich an die Oberseite 53 anschließt, ist in einem rechten Winkel zur Oberseite 53 der Ziehklinge 4 ausgebildet. In diesem Ausführungsbeispiel ist der zweite Bereich 52 der Schneide 5 von der Oberseite 53 der Ziehklinge 4 so ausgeführt, dass der Abstand in etwa einem Zehntel der Dicke der Ziehklinge 4 entspricht. Die Schneide 5 der Ziehklinge 4 weist in diesem Ausführungsbeispiel einen halbkreisförmigen Querschnitt auf, während die Schneide 5' der Ziehklinge 4 einen winkligen Querschnitt aufweist. Im Rahmen der Erfindung liegen somit weitere Querschnittsformen, die den gewünschten Geometrien des Kantenstreifens 3 der Platte 2 geschuldet sind.

Es liegt weiterhin im Rahmen der Erfindung, dass die Oberseite 53 der Ziehklinge 4 so ausgebildet ist, dass sie wenigstens im Bereich einer Schneide 5 einen spitzen Winkel zur Unterseite 55 der Ziehklinge 4 bildet.

In Figur 3 ist eine weitere, perspektivische Ansicht einer Ziehklinge 4 der erfindungsgemäßen Vorrichtung 1 dargestellt. In diesem Ausführungsbeispiel sind an einer Stirnseite der Ziehklinge 4 mehrere Schneiden 5, eingebracht, die unterschiedliche Geometrien aufweisen. An allen Schneiden 5, der Ziehklinge 4 sind jedoch die Bereiche 51, 52 ausgebildet, wobei der zweite Bereich 52 von der Oberseite 53 der Ziehklinge 4 beabstandet angeordnet ist. In diesem Ausführungsbeispiel weist der erste Bereich 51 der Schneide 5 der Ziehklinge 4, der sich an die Oberseite 53 anschließt, eine konvexe Geometrie auf. Der zweite Bereich 52 der Schneide 5 ist von der Oberseite 53 der Ziehklinge 4 in diesem Ausführungsbeispiel in etwa 0,2 mm beabstandet, was bei einer Dicke von 3,0 mm der Ziehklinge 4 etwa einem Fünfzehntel der Dicke der Ziehklinge 4 entspricht. Ein weiterer Vorteil der Ziehklinge 4 in diesem Ausführungsbeispiel wird darin gesehen, dass auf Grund der unterschiedlichen Geometrien der Schneiden 5 hier in einem Arbeitsgang an einer oder mehreren Platten 2 verschiedene Geometrien des Kantenstreifens 3 realisierbar sind. Dies ist auch sehr vorteilhaft bei der Verwendung der Ziehklinge 4 in einem Bearbeitungszentrum, bei dem an einer Platte 2 in einem Arbeitsgang ebenfalls verschiedene Geometrien des Kantenstreifens 3 realisierbar sind.
Es liegt jedoch auch im Rahmen der Erfindung, dass die Oberseite 53 der Ziehklinge 4 an wenigstens einer Schneide 5 eine Vertiefung aufweist, die sich unmittelbar an den ersten Bereich 51 der Schneide 5 anschließt und in etwa dessen Kontur entspricht. Es hat sich als vorteilhaft erwiesen, dass diese Vertiefung der Oberseite 53 etwa halbkreisförmig und/oder mehreckig von den freien Enden des ersten Bereiches 51 der Schneide 5 ausgehend ausgebildet ist, wobei die Vertiefung unmittelbar am ersten Bereich 51 der Schneide 5 ihre größte Ausdehnung aufweist und gegenüber dem ersten Bereich 51 der Schneide 5 in etwa wieder der Oberseite 53 entspricht.

## Patentansprüche

1. Vorrichtung zur Bearbeitung von Kantenstreifen aus thermoplastischen Werkstoffen, die auf die Schmalseiten von Flächenelementen, Platten aus holzartigen Werkstoffen für den Möbelbau oder dergleichen aufgebracht sind mittels zumindest einer im Wesentlichen ortsfesten Ziehklinge (4) mit einer Oberseite (53) und mit wenigstens einer der zu erzielenden Kantenkontur entsprechenden Schneide (5), mit der die Platten mit den Kantenstreifen in Eingriff gebracht sind,
**dadurch gekennzeichnet,**
**dass** an wenigstens einer Schneide (5) der Ziehklinge (4) ein erster Bereich (51) und ein zweiter Bereich (52) ausgebildet sind, wobei der zweite Bereich (52) durch den ersten Bereich (51) von der Oberseite (53) der Ziehklinge (4) beabstandet angeordnet ist, wobei der erste Bereich (51) der Schneide (5) in etwa einem rechten Winkel zur Oberseite (53) der Ziehklinge (4) ausgebildet ist und der zweite Bereich (52) in einem spitzen Winkel zur
Oberseite (53) der Ziehklinge (4) ausgebildet ist.

2. Vorrichtung nach Anspruch 1, **dadurch gekennzeichnet, dass** der Abstand des zweiten Bereiches (52) von der Oberseite (53) der Ziehklinge (4) wenigstens einem Zwanzigstel der Dicke der Ziehklinge (4) entspricht.

3. Vorrichtung nach einem der vorhergehenden Ansprüche, **dadurch gekennzeichnet, dass** der erste Bereich (51) der Schneide (5) konkav oder konvex zur Oberseite (53) der Ziehklinge (4) ausgebildet ist.

4. Vorrichtung nach einem der vorhergehenden Ansprüche, **dadurch gekennzeichnet, dass** die Oberseite (53) der Ziehklinge (4) in etwa einem spitzen Winkel zur Unterseite (55) der Ziehklinge (4) ausgebildet ist.

5. Vorrichtung nach einem der vorhergehenden Ansprüche, **dadurch gekennzeichnet, dass** die Oberseite (53) der Ziehklinge (4) an wenigstens einer Schneide (5) eine Vertiefung aufweist.

6. Vorrichtung nach Anspruch 5, **dadurch gekennzeichnet, dass** die Vertiefung am ersten Bereich (51) der Schneide (5) angeordnet ist.

7. Vorrichtung nach einem der Ansprüche 5 oder 6, **dadurch gekennzeichnet, dass** die Vertiefung etwa halbkreisförmig und/oder mehreckig von den freien Enden des ersten Bereiches (51) der Schneide (5) ausgehend ausgebildet ist.

8. Vorrichtung nach einem der Ansprüche 5 bis 7, **dadurch gekennzeichnet, dass** die Vertiefung am ersten Bereich (51) der Schneide (5) die größte Ausdehnung aufweist.

## Claims

1. Apparatus for processing edge strips made of thermoplastic materials, which are attached to the narrow sides of surface elements, panels made of wood-like materials for furniture construction or the like, by means of at least one substantially stationary scraper (4) having a top side (53) and having at least one cutting edge (5) which corresponds to the edge contour to be achieved and by way of which the panels are brought into engagement with the edge strips, **characterized in that** a first region (51) and a second region (52) are formed on at least one cutting edge (5) of the scraper (4), wherein the second region (52) is arranged in a manner spaced apart from the top side (53) of the scraper (4) by the first region (51), wherein the first region (51) of the cutting edge (5) is formed approximately at a right angle to the top side (53) of the scraper (4) and the second region (52) is formed at an acute angle to the top side (53) of the scraper (4).

2. Apparatus according to Claim 1, **characterized in that** the distance of the second region (52) from the top side (53) of the scraper (4) corresponds to at least one twentieth of the thickness of the scraper (4).

3. Apparatus according to either of the preceding claims, **characterized in that** the first region (51) of the cutting edge (5) is formed in a concave or convex manner with respect to the top side (53) of the scraper (4).

4. Apparatus according to one of the preceding claims, **characterized in that** the top side (53) of the scraper (4) is formed approximately at an acute angle to the underside (55) of the scraper (4).

5. Apparatus according to one of the preceding claims, **characterized in that** the top side (53) of the scraper (4) has a depression at at least one cutting edge (5).

6. Apparatus according to Claim 5, **characterized in that** the depression is arranged at the first region (51) of the cutting edge (5).

7. Apparatus according to either of Claims 5 and 6, **characterized in that** the depression is formed approximately in a semicircular and/or polygonal manner starting from the free ends of the first region (51) of the cutting edge (5).

8. Apparatus according to one of Claims 5 to 7, **characterized in that** the depression has its greatest extent at the first region (51) of the cutting edge (5).

## Revendications

1. Dispositif pour affleurer des bandes de bord en matériaux thermoplastiques, qui sont posées sur les côtés étroits d'éléments plats, des plaques en matériaux dérivés du bois pour la fabrication de meubles ou analogues, au moyen d'au moins une lame de raclage (4) essentiellement stationnaire avec un côté supérieur (53) et avec au moins un tranchant (5) correspondant au contour de bord à produire, avec laquelle les plaques sont mises en contact avec les bandes de bord, **caractérisé en ce qu'**une première zone (51) et une deuxième zone (52) sont formées sur au moins un tranchant (5) de la lame de raclage (4), dans lequel la deuxième zone (52) est disposée en position espacée du côté supérieur (53) de la lame de raclage (4) par la première zone (51), dans lequel la première zone (51) du tranchant (5) est réalisée sensiblement sous un angle droit par rapport au côté supérieur (53) de la lame de raclage (4), et la deuxième zone (52) est réalisée sous un angle aigu par rapport au côté supérieur (53) de la lame de raclage (4).

2. Dispositif selon la revendication 1, **caractérisé en ce que** la distance entre la deuxième zone (52) et le côté supérieur (53) de la lame de raclage (4) correspond au moins à un vingtième de l'épaisseur de la lame de raclage (4).

3. Dispositif selon l'une quelconque des revendications précédentes, **caractérisé en ce que** la première zone (51) du tranchant (5) est concave ou convexe vers le côté supérieur (53) de la lame de raclage (4).

4. Dispositif selon l'une quelconque des revendications précédentes, **caractérisé en ce que** le côté supérieur (53) de la lame de raclage (4) est réalisé sensiblement sous un angle aigu par rapport au côté inférieur (55) de la lame de raclage (4).

5. Dispositif selon l'une quelconque des revendications précédentes, **caractérisé en ce que** le côté supérieur (53) de la lame de raclage (4) présente un creux sur au moins un tranchant (5).

6. Dispositif selon la revendication 5, **caractérisé en ce que** le creux est disposé sur la première zone (51) du tranchant (5).

7. Dispositif selon l'une quelconque des revendications 5 ou 6, **caractérisé en ce que** le creux est réalisé sous forme semi-circulaire et/ou polygonale en partant des extrémités libres de la première zone (51) du tranchant (5).

8. Dispositif selon l'une quelconque des revendications 5 à 7, **caractérisé en ce que** le creux présente la plus grande extension sur la première zone (51) du tranchant (5).
